# EUROPÄISCHE PATENTSCHRIFT

(11) **EP 3 961 317 B1**
(45) Veröffentlichungstag und Bekanntmachung des Hinweises auf die Patenterteilung: **01.05.2024**
(21) Anmeldenummer: 21189467.0
(22) Anmeldetag: 03.08.2021
(51) Int. Cl.: G05B 19/042

(54) **VERFAHREN ZUR KONFIGURATION EINER MODULAREN SICHERHEITSSCHALTVORRICHTUNG**
METHOD FOR CONFIGURING A MODULAR SAFETY SWITCHING DEVICE
PROCÉDÉ DE CONFIGURATION D'UN DISPOSITIF MODULAIRE DE COMMUTATION DE SÉCURITÉ

(30) Priorität: 01.09.2020 DE 102020122870
(43) Veröffentlichungstag der Anmeldung: 02.03.2022
(73) Patentinhaber: Pilz GmbH & Co. KG, 73760 Ostfildern (DE)
(72) Erfinder: Bauknecht, Jochen, 73760 Ostfildern (DE); Rotzinger, Florian, 73760 Ostfildern (DE)
(74) Vertreter: Schäperklaus, Jochen

(56) Entgegenhaltungen:
- EP-B1- 2 098 926
- US-A1- 2019 025 790

## Beschreibung

Die vorliegende Erfindung betrifft ein Verfahren zur Konfiguration einer modularen Sicherheitsschaltvorrichtung.

Modulare Sicherheitsschaltvorrichtungen sind aus dem Stand der Technik in unterschiedlichen Ausführungsformen bereits bekannt. Sie dienen insbesondere dem Zweck, technische Anlagen oder Maschinen beim Auftreten einer Gefahrensituation sicher in einen für Menschen ungefährlichen Zustand zu überführen. Zu diesem Zweck werden eingangsseitig entsprechende Signale von Signalgebern, bei denen es sich zum Beispiel um Not-Aus-Schalter, Not-Halt-Schalter, Lichtgitter, Lichtvorhänge, Trittmatten, Schutztürpositionsschalter, 3D-Laserscanner etc. handeln kann, empfangen und sicher ausgewertet. Ausgangsseitig werden ein oder mehrere sichere Ausgangskontakte eines Ausgangskreises angesteuert. Über diese Ausgangskontakte werden beim Auftreten einer Gefahrensituation Aktoren, wie zum Beispiel Schütze, Ventile etc., derart angesteuert, dass eine an diese angeschlossene Maschine oder technische Anlage in einen für Menschen ungefährlichen Zustand überführt werden kann.

Derartige Sicherheitsschaltvorrichtungen umfassen mehrere Elektronikmodule, die in zumindest einer Modulreihe angeordnet sind und bestimmte Funktionalitäten aufweisen. Der modulare Aufbau einer Sicherheitsschaltvorrichtung schafft die Möglichkeit einer anwendungsspezifischen Konfiguration, indem mehrere Elektronikmodule individuell zusammengestellt, elektrisch miteinander verbunden und so konfiguriert werden, dass sie der modularen Sicherheitsschaltvorrichtung gemeinsam die gewünschten Sicherheitsfunktionen zur Verfügung stellen. Beispiele für Elektronikmodule, aus denen modulare Sicherheitsschaltvorrichtungen mit ganz unterschiedlichen Sicherheitsfunktionen aufgebaut werden können, sind unter anderem Eingangsmodule, die Eingangssignale eines oder mehrerer Signalgeber, wie zum Beispiel Eingangssignale von Sensoren oder Notbefehlsgeräten, empfangen und gegebenenfalls verarbeiten können, Ausgangsmodule, die Ausgangssignale an einen oder mehrere daran angeschlossene Aktoren ausgeben können, kombinierte Eingangs- und Ausgangsmodule (so genannte I/O-Module), Steuerungsmodule, welche die Zuordnung von Eingangs- zu Ausgangsmodulen steuern können, sowie Schnittstellenmodule, Kommunikationsmodule, Feldbuscontroller, Feldbuskoppler, etc..

Bei der Herstellung einer modularen Sicherheitsschaltvorrichtung werden die Elektronikmodule in der zumindest einen Modulreihe aneinandergereiht und entsprechend elektrisch verbunden und so konfiguriert, dass sie die für den konkreten Anwendungszweck unter Sicherheitsaspekten erforderlichen Funktionalitäten zur Verfügung stellen können. Abhängig vom konkreten Anwendungszweck ist die Konfiguration derartiger modularer Sicherheitsschaltvorrichtungen häufig relativ komplex, da zur Realisierung der gewünschten Sicherheitsfunktionen zum Beispiel logische UND-Verknüpfungen berücksichtigt und implementiert werden müssen.

Die EP 2 098 926 B1 offenbart ein Verfahren zur Konfiguration einer modularen Sicherheitsschaltvorrichtung, die eine Mehrzahl von Elektronikmodulen aufweist, die in zumindest einer Modulreihe angeordnet sind, umfassend die Schritte
- Auswählen einer Anzahl von Sicherheitsfunktionen der Sicherheitsschaltvorrichtung und Logikanforderungen an die Sicherheitsschaltvorrichtung mittels einer grafischen Benutzerschnittstelle eines softwarebasierten Konfigurationswerkzeugs,
- Erzeugen einer Konfiguration der Sicherheitsschaltvorrichtung mittels des Konfigurationswerkzeugs durch automatisiertes Auswählen von Elektronikmodulen aus einer Vielzahl von Elektronikmodultypen zur Realisierung der im vorhergehenden Schritt ausgewählten Funktionen der Sicherheitsschaltvorrichtung und Logikanforderungen an die Sicherheitsschaltvorrichtung, sowie
- Speichern der Konfiguration als Konfigurationsdatensatz.

Aus der US 2019/0025790 A1 ist es darüber hinaus bekannt, die Konfiguration einer modularen Sicherheitsschaltvorrichtung in einer Konfigurationsdatenbank zu speichern.

Die Aufgabe der vorliegenden Erfindung besteht darin, ein Verfahren zur Konfiguration einer modularen Sicherheitsschaltvorrichtung zur Verfügung zu stellen, welches den Konfigurationsprozess und auch den späteren Montageprozess vereinfachen kann.

Die Lösung dieser Aufgabe liefert ein Verfahren zur Konfiguration einer modularen Sicherheitsschaltvorrichtung mit den Merkmalen des Anspruchs 1. Die Unteransprüche betreffen vorteilhafte Weiterbildungen der Erfindung.

Ein erfindungsgemäßes Verfahren zur Konfiguration einer modularen Sicherheitsschaltvorrichtung, die eine Mehrzahl von Elektronikmodulen aufweist, wobei die Elektronikmodule aus einer Vielzahl zur Verfügung stehender Elektronikmodultypen ausgewählt sind und in zumindest einer Modulreihe angeordnet sind, umfasst die Schritte
- Auswählen einer Anzahl von Sicherheitsfunktionen der Sicherheitsschaltvorrichtung und Logikanforderungen an die Sicherheitsschaltvorrichtung mittels einer grafischen Benutzerschnittstelle eines softwarebasierten Konfigurationswerkzeugs,
- Erzeugen einer Konfiguration der Sicherheitsschaltvorrichtung mittels des Konfigurationswerkzeugs durch automatisiertes Auswählen von Elektronikmodulen aus der Vielzahl von Elektronikmodultypen zur Realisierung der im vorhergehenden Schritt ausgewählten Funktionen der Sicherheitsschaltvorrichtung und Logikanforderungen an die Sicherheitsschaltvorrichtung, sowie
- Speichern der Konfiguration als Konfigurationsdatensatz in einer Konfigurationsdatenbank,
wobei das Konfigurationswerkzeug für jedes der Elektronikmodule der modularen Sicherheitsschaltvorrichtung eine alphanumerische Kennung erzeugt, die zumindest einen Teil des Konfigurationsdatensatzes bildet, wobei die alphanumerische Kennung so gewählt ist, dass sie das betreffende Elektronikmodul und dessen Montageposition in der Modulreihe der modularen Sicherheitsschaltvorrichtung eindeutig spezifiziert, und wobei das Konfigurationswerkzeug für zumindest einige der Elektronikmodule der modularen Sicherheitsschaltvorrichtung eine zusätzliche alphanumerische Kennung erzeugt, die zumindest einen Teil des Konfigurationsdatensatzes bildet, wobei die zusätzliche alphanumerische Kennung so gewählt ist, dass sie die Stellung zumindest eines Drehschalters, insbesondere eines Rastpotentiometers des betreffenden Elektronikmoduls eindeutig spezifiziert.

Mittels des erfindungsgemäßen Verfahrens kann die teilweise sehr komplexe Konfiguration einer modularen Sicherheitsschaltvorrichtung stark vereinfacht werden, indem sie durch das softwarebasierte Konfigurationswerkzeug unterstützt wird. Die grafische Benutzerschnittstelle, die einem Benutzer vorzugsweise über das Internet zur Verfügung gestellt wird, ermöglicht eine einfache und intuitive Bedienung des Konfigurationswerkzeugs. Der Benutzer kann interaktive Benutzereingaben vornehmen und zum Beispiel entsprechende Logikanforderungen, die an die modulare Sicherheitsschaltvorrichtung gestellt werden, festlegen. Bei dem Konfigurationsprozess können zum Beispiel auch bestimmte, in der zu steuernden Anlage beziehungsweise Maschine vorhandene Signalgeber, insbesondere Meldegeräte, wie zum Beispiel Not-Aus- oder Not-Halt-Taster, Schutztüren, Lichtgitter usw., oder Sensoren, deren Eingangssignale sicher ausgewertet werden müssen, sowie Aktoren, die von den Ausgangsmodulen sicher angesteuert werden müssen, von dem Benutzer ausgewählt werden. Somit können also die Eingänge und Ausgänge der modularen Sicherheitsschaltvorrichtung mithilfe des Konfigurationswerkzeugs konfiguriert werden. Die grundlegende Idee des hier vorgestellten Verfahrens besteht darin, dass das Konfigurationswerkzeug in Abhängigkeit von den Benutzereingaben die Konfiguration der modularen Sicherheitsschaltvorrichtung in einem automatisierten Prozess erzeugt, ohne dass zu diesem Zweck seitens des Benutzers ein besonderes Expertenwissen erforderlich ist. Die vom Benutzer gestellten Anforderungen an die modulare Sicherheitsschaltvorrichtung werden vom Konfigurationswerkzeug verarbeitet. Das Konfigurationswerkzeug stellt aus den verfügbaren Elektronikmodultypen eine modulare Sicherheitsschaltvorrichtungen zusammen, welches den konkreten Nutzeranforderungen entspricht und somit die gewünschten Sicherheitsfunktionen realisiert. Das Konfigurationswerkzeug gibt eine entsprechende Modulkombination als Konfigurationsdatensatz aus, der in der Konfigurationsdatenbank abrufbar gespeichert wird. Dieser Konfigurationsdatensatz kann bei der Montage der modularen Sicherheitsschaltvorrichtung aus der Konfigurationsdatenbank abgerufen und entsprechend verarbeitet werden.

Bei dem erfindungsgemäßen Verfahren ist vorgesehen, dass das Konfigurationswerkzeug für jedes der Elektronikmodule der modularen Sicherheitsschaltvorrichtung eine alphanumerische Kennung erzeugt, die zumindest einen Teil des Konfigurationsdatensatzes bildet, wobei die alphanumerische Kennung so gewählt ist, dass sie das betreffende Elektronikmodul und dessen Montageposition in der zumindest einen Modulreihe der modularen Sicherheitsschaltvorrichtung eindeutig spezifiziert. Unter dem Begriff "alphanumerische Kennung" soll im Rahmen dieser Anmeldung eine Kennung verstanden werden, die aus Buchstaben und/oder Zahlen gebildet ist. Jedes einzelne Elektronikmodul kann zum Beispiel eine alphanumerische Kennung mit zwei alphanumerischen Zeichen erhalten, welche das Elektronikmodul und dessen Montageposition eindeutig spezifiziert. Dadurch kann die Bildung der zumindest einen Modulreihe der modularen Sicherheitsschaltvorrichtung aus den einzelnen Elektronikmodulen wesentlich vereinfacht werden. Die eindeutige Reihenfolge, in der die Elektronikmodule bei der Herstellung zu montieren sind, kann sich zum Beispiel aus einer Reihenfolge der alphanumerischen Zeichen ergeben, mit denen die Elektronikmodule im Konfigurationsdatensatz, der in der Konfigurationsdatenbank abrufbar gespeichert ist, gekennzeichnet sind. Das Konfigurationswerkzeug generiert eine alphanumerische Kennung der gesamten Sicherheitsschaltvorrichtung, in deren Zeichenlänge sich insbesondere auch die Anzahl der Elektronikmodule der modularen Sicherheitsschaltvorrichtung widerspiegelt.

Bei dem erfindungsgemäßen Verfahren ist ferner vorgesehen, dass das Konfigurationswerkzeug für zumindest einige der Elektronikmodule der modularen Sicherheitsschaltvorrichtung eine zusätzliche alphanumerische Kennung erzeugt, die zumindest einen Teil des Konfigurationsdatensatzes bildet, wobei diese zusätzliche alphanumerische Kennung so gewählt ist, dass sie die Stellung zumindest eines Drehschalters, insbesondere eines Rastpotentiometers, des betreffenden Elektronikmoduls eindeutig spezifiziert. Beispielsweise können zwei oder mehr zusätzliche alphanumerische Zeichen vorgesehen sein, welche die zusätzliche alphanumerische Kennung bilden und die Stellungen der Drehschalter, insbesondere der Rastpotentiometer, des betreffenden Elektronikmoduls eindeutig definieren, die für die gewünschte Konfiguration der modularen Sicherheitsschaltvorrichtung einzustellen sind.

In einer bevorzugten Ausführungsform wird vorgeschlagen, dass das Konfigurationswerkzeug einen Verdrahtungsplan für die Elektronikmodule erzeugt, der in der Konfigurationsdatenbank abrufbar gespeichert wird und mit dem Konfigurationsdatensatz verknüpft wird oder einen Teil des Konfigurationsdatensatzes bildet. Dieser Verdrahtungsplan gibt insbesondere an, wie die einzelnen Elektronikmodule der Sicherheitsschaltvorrichtung entweder direkt beim Hersteller oder bei einer späteren Endmontage am Verwendungsort miteinander verdrahtet werden müssen, damit die modulare Sicherheitsschaltvorrichtung die gewünschten Sicherheitsfunktionen und Logikanforderungen realisieren kann.

In einer besonders bevorzugten Ausführungsform besteht die Möglichkeit, dass das Konfigurationswerkzeug sicherheitsrelevante Kenndaten der modularen Sicherheitsschaltvorrichtung berechnet, die in der Konfigurationsdatenbank abrufbar gespeichert werden und mit dem Konfigurationsdatensatz verknüpft werden oder einen Teil des Konfigurationsdatensatzes bilden.

In einer bevorzugten Ausführungsform besteht die Möglichkeit, dass für die alphanumerische Kennung jedes der Elektronikmodule eine Prüfziffer, insbesondere eine Prüfsumme, erzeugt wird. Dadurch wird insbesondere eine Konsistenzprüfung ermöglicht, die verhindert, dass eine modulare Sicherheitsschaltvorrichtung mit einer fehlerhaften Konfiguration hergestellt wird.

Weitere Merkmale und Vorteile der vorliegenden Erfindung werden deutlich anhand der nachfolgenden Beschreibung eines bevorzugten Ausführungsbeispiels unter Bezugnahme auf die beiliegenden Abbildungen. Darin zeigen:
- Fig. 1: eine schematische Darstellung einer modularen Sicherheitsschaltvorrichtung, die aus einer Mehrzahl von Elektronikmodulen aufgebaut ist,
- Fig. 2: eine schematische Darstellung, die Einzelheiten eines Verfahrens zur Konfiguration einer modularen Sicherheitsschaltvorrichtung gemäß der vorliegenden Erfindung veranschaulicht.

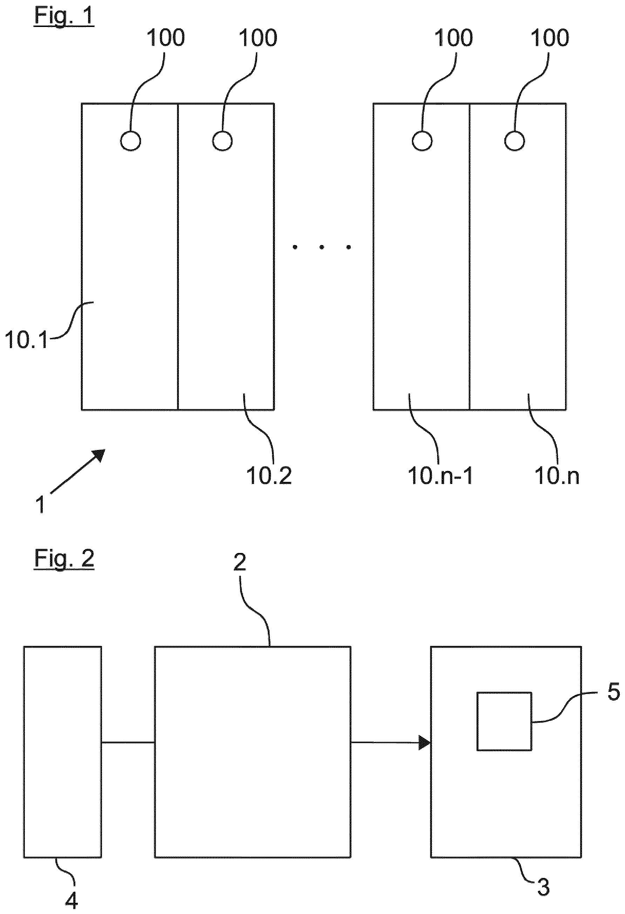

Unter Bezugnahme auf Fig. 1 soll nachfolgend zunächst der grundlegende Aufbau einer modularen Sicherheitsschaltvorrichtung 1 näher erläutert werden. Die modulare Sicherheitsschaltvorrichtung 1 weist eine Mehrzahl n von Elektronikmodulen 10.1-10.n auf, die in mindestens einer Modulreihe angeordnet sind. Ein erstes Elektronikmodul 10.1 bildet dabei vorzugsweise ein zentrales Steuerungsmodul der modularen Sicherheitsschaltvorrichtung 1 und wird häufig auch als Kopfmodul bezeichnet. Die übrigen Elektronikmodule 10.2-10.n sind anwendungsspezifisch aus einer Vielzahl unterschiedlicher Elektronikmodultypen ausgewählt. Bei den übrigen Elektronikmodulen 10.2-10.n kann es sich zum Beispiel um Eingangsmodule, die Eingangssignale eines oder mehrerer Signalgeber, wie zum Beispiel Eingangssignale von Sensoren oder Notbefehlsgeräten, sicher empfangen und gegebenenfalls verarbeiten können, Ausgangsmodule, die Ausgangssignale an einen oder mehrere daran angeschlossene Aktoren sicher ausgeben können, kombinierte Eingangs- und Ausgangsmodule (so genannte I/O-Module), die Eingänge und Ausgänge aufweisen, sowie Schnittstellenmodule, Feldbuscontroller, Feldbuskoppler, etc.. Die Anzahl und Art der verwendeten Elektronikmodule 10.1-10.n hängt unmittelbar vom geplanten Einsatz- und Verwendungszweck der modularen Sicherheitsschaltvorrichtung 1 und insbesondere auch von dem zu erreichenden Sicherheitsniveau ab. Generell besteht die Aufgabe der modularen Sicherheitsschaltvorrichtung 1 darin, beim Auftreten einer Gefahrensituation, die von den Sensoren beziehungsweise Meldegeräten erfasst wird, die an die modulare Sicherheitsschaltvorrichtung 1 angeschlossenen Aktoren sicherheitsgerichtet abzuschalten und nach dem Ende der Gefahrensituation wieder zu aktivieren.

Abhängig vom Verwendungszweck der modularen Sicherheitsschaltvorrichtung 1 kann die Konfiguration des Modulaufbaus sehr aufwändig und schwierig sein. Nachfolgend soll ein Verfahren beschrieben werden, mittels dessen der Konfigurationsprozess und auch der spätere Montageprozess der modularen Sicherheitsschaltvorrichtung 1 erheblich vereinfacht werden können.

Ein derartiges Verfahren zur Konfiguration einer modularen Sicherheitsschaltvorrichtung 1, die eine Mehrzahl von Elektronikmodulen 10.1-10.n aufweist, die in zumindest einer Modulreihe angeordnet sind, umfasst die nachfolgend erläuterten Schritte:
In einem ersten Schritt werden von einem Benutzer eine Anzahl von Sicherheitsfunktionen der Sicherheitsschaltvorrichtung 1 und Logikanforderungen an die Sicherheitsschaltvorrichtung 1 mittels einer grafischen Benutzerschnittstelle 4 eines softwarebasierten Konfigurationswerkzeugs 2 ausgewählt. Dieses softwarebasierte Konfigurationswerkzeug 2 wird von einer Recheneinrichtung ausgeführt. Die grafische Benutzerschnittstelle 4 wird mittels einer Anzeigevorrichtung einem Benutzer angezeigt. Bei dieser Anzeigevorrichtung muss es sich nicht zwingend um eine Anzeigevorrichtung handeln, die an die Recheneinrichtung angeschlossen ist, welche das softwarebasierte Konfigurationswerkzeug 2 ausführt. Beispielsweise kann die grafische Benutzerschnittstelle 4 mittels einer Anzeigevorrichtung einer weiteren Recheneinrichtung, bei der es sich zum Beispiel um einen Computer, einen Tablet-PC oder ein Mobiltelefon handeln kann,
dargestellt werden, welche über das Internet mit der Recheneinrichtung verbunden ist, welche das softwarebasierte Konfigurationswerkzeug 2 ausführt.

In einem nächsten Schritt wird eine Konfiguration der Sicherheitsschaltvorrichtung 1 mittels des Konfigurationswerkzeugs 2 durch automatisiertes Auswählen von Elektronikmodulen 10.1-10.n aus einer Vielzahl von zur Verfügung stehenden Elektronikmodultypen erzeugt. Mittels dieser Konfiguration können die im vorhergehenden Schritt ausgewählten Sicherheitsfunktionen der Sicherheitsschaltvorrichtung 1 und Logikanforderungen an die Sicherheitsschaltvorrichtung 1 umgesetzt werden.

Anschließend wird diese Konfiguration der Sicherheitsschaltvorrichtung 1 vorzugsweise beim Hersteller der modularen Sicherheitsschaltvorrichtung 1 als Konfigurationsdatensetz 5 in einer Konfigurationsdatenbank 3 abrufbar gespeichert.

Bei diesem Konfigurationsprozess kann der Benutzer zum Beispiel eine Anzahl von Schutzzonen in einer technischen Anlage vorgeben, wobei in diesen Schutzzonen bestimmte Sicherheitsanforderungen einzuhalten sind. Das Konfigurationswerkzeug 2 ist vorzugsweise so ausgebildet, dass es die für die vorgegebenen Sicherheitsanforderungen geeigneten Signalgeber, insbesondere Meldegeräte und/oder Sensoren, und Aktoren sowie die für den Betrieb der Signalgeber und Aktoren erforderlichen Elektronikmodule 10.1-10.n in einem automatisierten Prozess selbständig auswählt. Die Signalgeber und Aktoren können auch von einem Benutzer während des Konfigurationsprozesses vorgegeben werden. Ferner können mittels des Konfigurationswerkzeug 2 vorzugsweise auch verschiedene Sicherheitskenndaten der modularen Sicherheitsschaltvorrichtung 1, wie zum Beispiel einzuhaltende Abstände von Schutzzonen oder dergleichen, berechnet werden. Vorzugsweise werden diese Sicherheitskenndaten ebenfalls in der Konfigurationsdatenbank 3 abrufbar gespeichert und mit dem Konfigurationsdatensatz 5 verknüpft.

Vorzugsweise kann das Konfigurationswerkzeug 2 darüber hinaus auch einen Verdrahtungsplan für die Elektronikmodule 10.1-10.n erzeugen, der in der Konfigurationsdatenbank 3 abrufbar gespeichert wird und mit dem Konfigurationsdatensatz 5 verknüpft wird oder einen Teil des Konfigurationsdatensatzes 5 bildet. Dieser Verdrahtungsplan gibt insbesondere an, wie die einzelnen Elektronikmodule 10.1-10.n der Sicherheitsschaltvorrichtung 1 entweder direkt beim Hersteller oder bei einer späteren Montage am Verwendungsort miteinander verdrahtet werden müssen, damit die modulare Sicherheitsschaltvorrichtung 1 die gewünschten Sicherheitsfunktionen und Logikanforderungen realisieren kann.

Erfindungsgemäß erzeugt das Konfigurationswerkzeug 2 für jedes der Elektronikmodule 10.1.-10.n der modularen Sicherheitsschaltvorrichtung 1 eine alphanumerische Kennung, wobei die alphanumerische Kennung so gewählt ist, dass sie das Elektronikmodul 10.1.-10.n und dessen Montageposition in der Modulreihe der modularen Sicherheitsschaltvorrichtung 1 eindeutig spezifiziert. Jedes einzelne Elektronikmodul 10.1.-10.n kann zum Beispiel eine vierstellige alphanumerische Kennung bestehend aus zwei alphanumerischen Zeichen erhalten, welche das Elektronikmodul 10.1.-10.n und dessen Montageposition eindeutig spezifiziert (Positionskennung). Beispielsweise können zwei oder mehr zusätzliche alphanumerische Zeichen vorgesehen sein, welche eine zusätzliche Kennung (Einstellkennung) bilden und die Stellungen eines oder mehrerer Drehschalter 100, insbesondere eines oder mehrerer Rastpotentiometer, des betreffenden Elektronikmoduls 10.1.-10.n eindeutig definieren, die bei der Montage für die korrekte Konfiguration einzustellen sind. Die eindeutige Reihenfolge, in der die Elektronikmodule 10.1.-10.n später zu montieren sind, kann sich zum Beispiel aus einer Reihenfolge der alphanumerischen Zeichen ergeben, mit denen die Elektronikmodule 10.1.-10.n im Konfigurationsdatensatz 5, welcher in der Konfigurationsdatenbank 3 abrufbar gespeichert ist, gekennzeichnet sind.

Das Konfigurationswerkzeug 2 generiert also eine alphanumerische Kennung der gesamten modularen Sicherheitsschaltvorrichtung 1, die zumindest als Teil des Konfigurationsdatensatzes 5 in der Konfigurationsdatenbank 3 abrufbar gespeichert wird und in deren Zeichenlänge sich insbesondere auch die Anzahl der Elektronikmodule 10.1.-10.n widerspiegelt.

In einer vorteilhaften Weiterbildung besteht die Möglichkeit, dass für die alphanumerische Kennung jedes der Elektronikmodule 10.1-10.n eine Prüfziffer, insbesondere eine Prüfsumme, erzeugt wird. Dadurch wird insbesondere eine Konsistenzprüfung ermöglicht, die verhindert, dass der Kunde eine modulare Sicherheitsschaltvorrichtung 1 nicht in der gewünschten Konfiguration erhält.

Der in der Konfigurationsdatenbank 3 abrufbar gespeicherte Konfigurationsdatensatz 5 kann zum Beispiel nach dem Auslösen eines Fertigungsauftrags beim Hersteller der modularen Sicherheitsschaltvorrichtung 1 ausgelesen werden. Die Systemkonfiguration der modularen Sicherheitsschaltvorrichtung 1 wird vorzugsweise an speziellen Fertigungstischen beim Hersteller gefertigt. Diese erhalten den Konfigurationsdatensatz 5 der modularen Sicherheitsschaltvorrichtung 1 aus der Konfigurationsdatenbank 3. Ein Softwareprogramm erstellt aus dem Konfigurationsdatensatz 5 eine visuelle Darstellung der modularen Sicherheitsschaltvorrichtung 1 für die Werker, welches auf einer Anzeigevorrichtung angezeigt wird. Anhand dieser visuellen Darstellung und des Verdrahtungsplans kann nun die Konfiguration des modularen Sicherheitsschaltvorrichtung 1 aus den Elektronikmodulen 10.1.-10.n sehr einfach vorgenommen werden.

## Patentansprüche

1. Verfahren zur Konfiguration einer modularen Sicherheitsschaltvorrichtung (1), die eine Mehrzahl von Elektronikmodulen (10.1-10.n) aufweist, wobei die Elektronikmodule (10.1-10.n) aus einer Vielzahl zur Verfügung stehender Elektronikmodultypen ausgewählt sind und in zumindest einer Modulreihe angeordnet sind, umfassend die Schritte
- Auswählen einer Anzahl von Sicherheitsfunktionen der Sicherheitsschaltvorrichtung (1) und Logikanforderungen an die Sicherheitsschaltvorrichtung (1) mittels einer grafischen Benutzerschnittstelle (4) eines softwarebasierten Konfigurationswerkzeugs (2),
- Erzeugen einer Konfiguration der
Sicherheitsschaltvorrichtung (1) mittels des Konfigurationswerkzeugs (2) durch automatisiertes Auswählen von Elektronikmodulen (10.1-10.n) aus der Vielzahl von Elektronikmodultypen zur Realisierung der im vorhergehenden Schritt ausgewählten Sicherheitsfunktionen der Sicherheitsschaltvorrichtung (1) und Logikanforderungen an die Sicherheitsschaltvorrichtung (1), sowie
- Speichern der Konfiguration der
Sicherheitsschaltvorrichtung (1) als Konfigurationsdatensatz (5) in einer Konfigurationsdatenbank (3),
wobei das Konfigurationswerkzeug (2) für jedes der Elektronikmodule (10.1-10.n) der modularen Sicherheitsschaltvorrichtung (1) eine alphanumerische Kennung erzeugt, die zumindest einen Teil des
Konfigurationsdatensatzes (5) bildet, wobei die alphanumerische Kennung so gewählt ist, dass sie das betreffende Elektronikmodul (10.1-10.n) und dessen Montageposition in der Modulreihe der modularen Sicherheitsschaltvorrichtung (1) eindeutig spezifiziert, und wobei das Konfigurationswerkzeug (2) für zumindest einige der Elektronikmodule (10.1-10.n) der modularen Sicherheitsschaltvorrichtung (1) eine zusätzliche alphanumerische Kennung erzeugt, die zumindest einen Teil des Konfigurationsdatensatzes (5) bildet, wobei die zusätzliche alphanumerische Kennung so gewählt ist, dass sie die Stellung zumindest eines Drehschalters (100), insbesondere eines Rastpotentiometers des betreffenden Elektronikmoduls (10.1-10.n) eindeutig spezifiziert.

2. Verfahren nach Anspruch 1, **dadurch gekennzeichnet, dass** das Konfigurationswerkzeug (2) einen Verdrahtungsplan für die Elektronikmodule (10.1-10.n) der modularen Sicherheitsschaltvorrichtung (1) erzeugt, der in der Konfigurationsdatenbank (3) abrufbar gespeichert wird und mit dem Konfigurationsdatensatz (5) verknüpft wird oder einen Teil des Konfigurationsdatensatzes (5) bildet.

3. Verfahren nach einem der Ansprüche 1 oder 2, **dadurch gekennzeichnet, dass** das Konfigurationswerkzeug (2) sicherheitsrelevante Kenndaten der modularen Sicherheitsschaltvorrichtung (1) berechnet, die in der Konfigurationsdatenbank (3) abrufbar gespeichert werden und mit dem Konfigurationsdatensatz (5) verknüpft werden oder einen Teil des Konfigurationsdatensatzes (5) bilden.

4. Verfahren nach einem der Ansprüche 1 bis 3, **dadurch gekennzeichnet, dass** für die alphanumerische Kennung jedes der Elektronikmodule (10.1-10.n) eine Prüfziffer, insbesondere eine Prüfsumme, erzeugt wird.

## Claims

1. Method for configuring a modular safety switching device (1), which has a plurality of electronic modules (10.1-10.n), wherein the electronic modules (10.1-10.n) are selected from a plurality of available electronic module types and are arranged in at least one module row, comprising the steps:
- selecting a number of safety functions of the safety switching device (1) and logic requirements for the safety switching device (1) by means of a graphic user interface (4) of a software-based configuration tool (2),
- generating a configuration of the safety switching device (1) by means of the configuration tool (2) by automated selection of electronic modules (10.1-10.n) from the plurality of electronic module types for providing the safety functions of the safety switching device (1) selected in the previous step and logic requirements for the safety switching device (1), and
- storing the configuration of the safety switching device (1) as a configuration dataset (5) in a configuration database (3),
wherein the configuration tool (2) for each of the electronic modules (10.1-10.n) of the modular safety switching device (1) generates an alphanumerical identifier which forms at least a part of the configuration dataset (5), wherein the alphanumerical identifier is selected so that it uniquely specifies the relevant electronic module (10.1-10.n) and its assembly position in the module row of the modular safety switching device (1), and wherein the configuration tool (2) generates an additional alphanumerical identifier for at least some of the electronic modules (10.1-10.n) of the modular safety switching device (1), which identifier forms at least part of the configuration dataset (5), wherein the additional alphanumerical identifier is selected so that it uniquely specifies the position of at least one rotary switch (100), in particular a detent potentiometer of the relevant electronic module (10.1- 10.n).

2. Method according to claim 1, **characterized in that** the configuration tool (2) generates a wiring diagram for the electronic modules (10.1-10.n) of the modular safety switching device (1), which is stored in the configuration database (3) in a retrievable manner and is linked to the configuration dataset (5) or forms a part of the configuration dataset (5).

3. Method according to any one of claims 1 or 2, **characterized in that** the configuration tool (2) calculates the safety-relevant characteristic data of the modular safety switching device (1), which are stored in the configuration database (3) in a retrievable manner and are linked to the configuration dataset (5) or form a part of the configuration dataset (5).

4. Method according to any one of claims 1 to 3, **characterised in that** a check digit, in particular a check sum, is generated for the alphanumerical identification of each of the electronic modules (10.1-10.n).

## Revendications

1. Procédé de configuration d'un dispositif de commutation de sécurité modulaire (1) qui présente une pluralité de modules électroniques (10.1-10.n), dans lequel les modules électroniques (10.1-10.n) sont sélectionnés parmi un grand nombre de types de modules électroniques disponibles et sont disposés en au moins une rangée de modules, comprenant les étapes de
- sélection d'un certain nombre de fonctions de sécurité du dispositif de commutation de sécurité (1) et d'exigences logiques pour le dispositif de commutation de sécurité (1) au moyen d'une interface utilisateur graphique (4) d'un outil de configuration logiciel (2),
- génération d'une configuration du dispositif de commutation de sécurité (1) au moyen de l'outil de configuration (2) par la sélection automatisée de modules électroniques (10.1-10.n) parmi le grand nombre de types de modules électroniques pour la mise en oeuvre des fonctions de sécurité du dispositif de commutation de sécurité (1) sélectionnées à l'étape précédente et des exigences logiques pour le dispositif de commutation de sécurité (1), ainsi que
- stockage de la configuration du dispositif de commutation de sécurité (1) en tant que jeu de données de configuration (5) dans une base de données de configuration (3),
dans lequel l'outil de configuration (2) génère pour chacun des modules électroniques (10.1-10.n) du dispositif de commutation de sécurité modulaire (1) un identifiant alphanumérique qui forme au moins une partie du jeu de données de configuration (5), dans lequel l'identifiant alphanumérique est sélectionné de sorte que le module électronique concerné (10.1-10.n) et sa position de montage dans la rangée de modules du dispositif de commutation de sécurité modulaire (1) sont clairement spécifiés, et dans lequel l'outil de configuration (2) génère un identifiant alphanumérique supplémentaire pour au moins certains des modules électroniques (10.1-10.n) du dispositif de commutation de sécurité modulaire (1), qui forme au moins une partie du jeu de données de configuration (5), dans lequel l'identifiant alphanumérique supplémentaire est sélectionné de sorte qu'il spécifie clairement la position d'au moins un commutateur rotatif (100), en particulier un potentiomètre à encliquetage du module électronique concerné (10.1-10.n).

2. Procédé selon la revendication 1, **caractérisé en ce que** l'outil de configuration (2) génère un schéma de câblage pour les modules électroniques (10.1-10.n) du dispositif de commutation de sécurité modulaire (1), qui est stocké dans la base de données de configuration (3) de manière récupérable et qui est associé au jeu de données de configuration (5) ou forme une partie du jeu de données de configuration (5).

3. Procédé selon l'une quelconque des revendications 1 ou 2, **caractérisé en ce que** l'outil de configuration (2) calcule les caractéristiques de sécurité du dispositif de commutation de sécurité modulaire (1), qui sont stockées de manière récupérable dans la base de données de configuration (3) et sont liées au jeu de données de configuration (5) ou à une partie du jeu de données de configuration (5).

4. Procédé selon l'une quelconque des revendications 1 à 3, **caractérisé en ce qu'**un chiffre de contrôle, en particulier une somme de contrôle, est généré pour l'identifiant alphanumérique de chacun des modules électroniques (10.1-10.n).
